# EUROPEAN PATENT APPLICATION

(11) **EP 2 260 731 A1**
(43) Date of publication of application: **15.12.2010**
(21) Application number: 10005894.0
(22) Date of filing: 08.06.2010
(51) Int. Cl.: A23P 1/08, A21C 9/04, A23L 1/00

(54) **Coating delivery method and apparatus**

(30) Priority: 08.06.2009 GB 0909704; 14.10.2009 GB 0918004
(71) Applicant: Spice application systems LTD, Oxford, Oxfordshire OX4 4GH (GB)
(72) Inventor: King, Peter, Sandford on Thames Oxford Oxfordshire OX4 4YQ (GB)
(74) Representative: Humphrey-Evans, Edward John

(57) **Abstract**

The present invention relates to an improved apparatus and method for delivering a coating substance and more particularly, though not necessarily, to an improved apparatus for delivering a powder coating. There exists a wide variety of products that require to be coated with a substance (e.g. powder, liquid, suspension, etc) during their preparation. For example, snack foods such as potato crisps and corn chips are usually coated with flavouring. A traditional method used for coating snack foods involves the use of a tilted cylindrical rotating drum. Notwithstanding improvements within the industry, the percentage of snack foods that are produced without full double-sided coating is high, with a significant of typical snack foods being coated only one side is of the order of 60%. The present invention seeks to provide a system for applying flavouring to snack foods and the like reliably and evenly across the coated surfaces of the snack. The present invention provides an apparatus for delivering a coating substance towards a product to be coated in a coating system having an operating width, the apparatus comprising an inclined vibratory chute (20) for conveying the coating substance (2) to a location above said product, the chute comprising a base, a pair of unequal length sidewalls (11,12) and an exit (3) whereby to provide a chute with an exit edge in general correspondence with the operating width.

## Description

### Field of the Invention

The present invention relates to an improved apparatus and method for delivering a coating substance and more particularly, though not necessarily, to an improved apparatus for delivering a powder coating.

### Background

There exists a wide variety of products that require to be coated with a substance (e.g. powder, liquid, suspension, etc) during their preparation. For example, snack foods such as potato crisps and corn chips are usually coated with a flavouring. It is generally desirable to be able to achieve a uniform and controllable coating over the entire surface of a product.

A traditional method used for coating snack foods involves the use of a rotating drum which has its axis generally aligned with the horizontal, but with a slight tilt. Products introduced into one end of the drum tend to travel to the other end as the drum rotates. Flavouring in the form of a powder is delivered via an inclined chute to a location within the drum so that the flavouring is sprinkled onto the products to be coated. This technique tends to result in a non-uniform coating of products, with flavour concentration varying between product pieces and across the surfaces of individual pieces. A significant issue in the use of any drum system is that tines associated with an inside surface of the drum can damage product to be coated.

It has been recognised that coating uniformity may be improved by placing a charge on the powder, using for example a needle electrode located in the transit path of the product. If the product delivery mechanism, e.g. a rotating drum, is grounded, the products to be coated will also tend to be grounded as they pass under the powder delivery mechanism. The charged powder will be attracted to the products in a generally uniform manner, in turn resulting in a generally uniform coating. An alternative electrostatic coating apparatus comprises a venturi tube through which the coating substance is forced by a pressurised gas. Upon emerging from an exit nozzle, the substance passes a charging electrode. A blockage problem can arise due to the coating substance building up within the venturi tube. Such blockage results in production downtime, increasing operating costs and decreasing productivity.

Figure 1 illustrates an apparatus for coating a product as described in GB 2,385,810. The apparatus comprises a vibratory inclined chute 1 for conveying a coating substance 2, with an exit end 3 and an entry end 4. A gas jet nozzle 5 and a needle electrode 6 are located beneath the exit end 3 of the chute 1. In use, a coating substance is urged along the vibratory conveyor towards the exit edge whereupon, under the force of gravity, the coating substance falls into a pressurised gas stream issuing from the nozzle 5. The gas stream, as it passes through an electric field created by the charged needle electrode, becomes charged. The charged gas then disperses and imparts a charge to the falling substance.

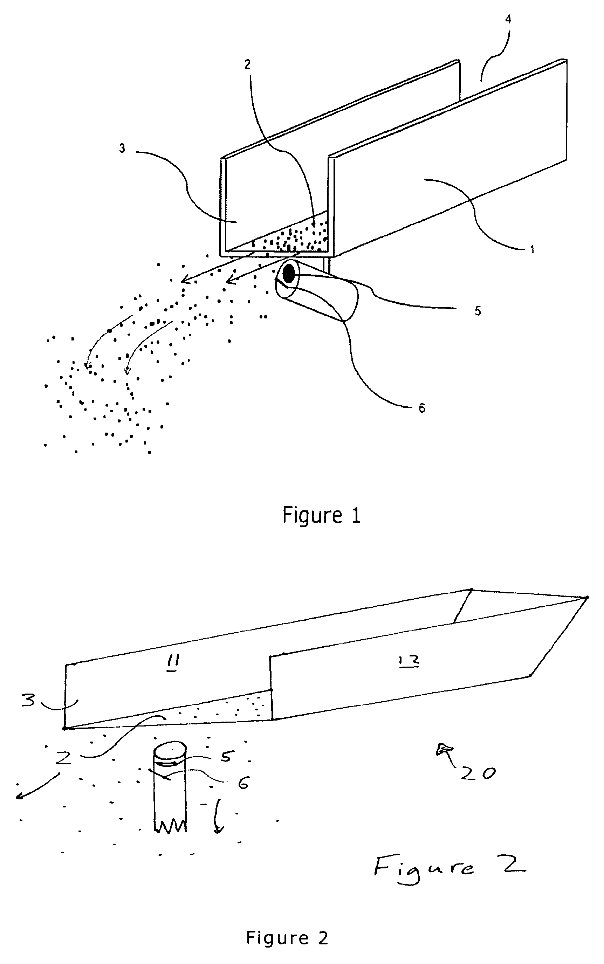

As described in GB 2,385,810, the chute used to convey the coating substance is narrow, with a width of 75mm or less, and the coating tends to continue moving in the (longitudinal) direction of the chute (as shown by the arrows in Figure 1) after exiting from the chute, such that the coating is only applied within a narrow region beneath it. Multiple chutes, each with their own gas nozzle and needle electrode, are then required in order to coat a wider region. The use of multiple chutes leads to additional expense on equipment and maintenance.

Notwithstanding the above, the percentage of snack foods that are produced without full double-sided coating is high, with typical snack foods being coated only one side being of the order of 60%.

### Object to the invention

The present invention seeks to overcome or ameliorate at least some of the disadvantages described above: the present invention seeks to provide a system that can enable flavouring to be applied in a more uniform fashion that has heretofore been possible. Further, the present invention seeks to provide a system for applying flavouring to snack foods and the like reliably and evenly across the entire surfaces of the snack or at least on both sides of a snack.

### Summary

The present invention is applicable in particular to the coating of snack food products with a dry, powdered flavouring. However, the invention may also be used to coat other products including, but not limited to, pharmaceuticals.

According to a first aspect of the present invention there is provided an apparatus for delivering a coating substance towards a product to be coated in a coating system, the coating system having an operating width, the apparatus comprising an inclined vibratory chute for conveying the coating substance to a location above said product, the chute comprising a base, a pair of unequal length sidewalls and an exit, the exit being defined between the ends of unequal length sidewalls disposed across the width between the ends of the chute, the width of the chute being less than the width of the exit, the apparatus further comprising a gas nozzle located to provide, in use, a gas knife substantially immediately beneath and uniformly across said exit for dispersing the coating substance falling from said chute, whereby to coat product. That is to say, there is provided a scarf feeder wherein the exit edge of the chute is angled with respect to a conveying direction of the chute. Typically the exit edge is between 70° and 20°, the precise angle being determined by the desired width of coating product.

In a preferred embodiment, the apparatus further comprises an electrode attached to or located adjacent to the gas nozzle; and means for charging the electrode; wherein the charged electrode acts so as to impart a charge to said gas flow and so onto the coating substance falling from the chute. Conveniently, the gas knife is defined by a nozzle operable to provide a jet of gas with an angular spread, wherein the angular spread of the air assist is in the range of 60° - 140°, the jet of gas being directed generally horizontally, or slightly upwardly in the region of 0 - 35°.

The coating system can comprise a conveyor upon which product is placed, whereby the chute, in use, can provide a wide distribution of coating to evenly and thoroughly disperse coating substance upon said conveyor surface.

The coating system can comprise first and second conveyor surfaces, interposed by an inverting station; said first and second stations having respective first and second chutes; in use, the first conveyor receiving product to provide a first surface of the product, upon which a coating from said first chute is received; the inverter then inverting the product and placing the product on a second conveyor, whereby to provide a second surface of the product, upon which a coating from the second chute is received, whereby the chute, in use, can provide a wide distribution of coating to evenly and thoroughly disperse coating substance upon said product surfaces. By the use of a system without a rotating drum, damaged product, especially when of a relatively rigid crisp or crisp-like product can be minimized.

The coating system can further comprise an enclosure operably arranged to cover the or each coating stations, the enclosure defining an internal space above each chute and enabling a coating vapour to be established which can deposit flavouring uniformly upon product being transported upon a conveyor.

Each enclosure has sides that depend below an operational height of the conveyor about the enclosure. Further, each enclosure has a front and rear edge portion which extend transversely above the conveyor, having depending edges which lie sufficiently adjacent above the conveyor to enable passage of product being transported upon the conveyor - so that passage of product upon a conveyor transporting product from an entrance part to an exit part of the enclosure can be enabled. These first and second edges are conveniently adjustable relative to a conveyor surface whereby to allow passage of different types of product thereunder.

The coating system can comprise a rotatable drum apparatus, the drum having an entrance aperture and an exit aperture at opposite ends of an axis of rotation, whereby the chute, in use, can provide a wide distribution of coating substance, such as flavouring, to evenly and thoroughly disperse coating substance within said drum apparatus, whereby, for example, to coat said flavouring upon a snack food product.

According to a further aspect of the present invention there is provided a method of delivering a coating substance towards a product to be coated, the method comprising conveying the coating substance along an inclined scarf chute to a location above a surface carrying the product, the chute comprising a base, a pair of unequal length sidewalls and an exit edge of the chute beyond said side walls; providing a gas knife substantially immediately beneath and uniformly across said exit for dispersing the coating substance and allowing said coating substance to fall and lay upon product as it traverses underneath the chute.

In a further aspect of the present invention a system of positively coating snack food product and the like with a flavouring is provided in a three stage arrangement, whereby a minimal loss of flavouring product is encountered. In a first stage of the process, a first side of a product is coated; the product is then inverted and a second surface of the product is then coated.

Preferably, the method further comprises the step of subjecting the coating substance to an electric field as the coating substance falls under gravity towards a product, substantially immediately beneath the exit end of said inclined chute, whereby to charge the coating substance, further including the step of grounding the product to be coated whereby to cause the coating to be electrostatically attracted to said product. Conveniently, the apparatus is enclosed by a rotatable, inclined drum assembly or a chamber with a conveyor supporting product to be coated.

### Brief Description of the Drawings

Figure 1 illustrates a known coating delivery apparatus;
Figure 2 is a perspective view of coating delivery apparatus according to an embodiment of the present invention;
Figure 3 is a plan view of the chute of the coating delivery apparatus of Figure 2;
Figures 4 and 5 comprise a side view and a plan view of a first system in accordance with the invention;
Figures 4a and 5a comprise a side view and a plan view of the first system in accordance with the invention with enclosures; and,
Figure 6 provides a second system in accordance with the invention.

### Detailed Description of the Preferred Embodiments

There will now be described, by way of example only, the best mode contemplated by the inventor for carrying out the present invention. In the following description, numerous specific details are set out in order to provide a complete understanding to the present invention. It will be apparent to those skilled in the art, that the present invention may be put into practice with variations of the specific.

A first embodiment of the invention is shown with reference to Figure 2, which shows a coating delivery apparatus comprising an inclined chute 1 for conveying a powder coating 2, in a direction from an entry end towards an exit edge 13. A gas jet nozzle 5 and a needle electrode 6 are located beneath the exit edge 13 of the chute 1. This is substantially as described with reference to GB 2,385,810. In contrast to this known system, however, and in accordance with the invention, the chute is defined between unequal length side walls 11 & 12, whereby to define an exit edge 13 longer than the width of the chute. That is to say, there is provided a scarf feeder wherein the exit edge of the chute is angled from the perpendicular with respect to a conveying direction of the chute and there is provided a gas knife operable to provide a uniform flow of gas underneath the exit edge of the chute.

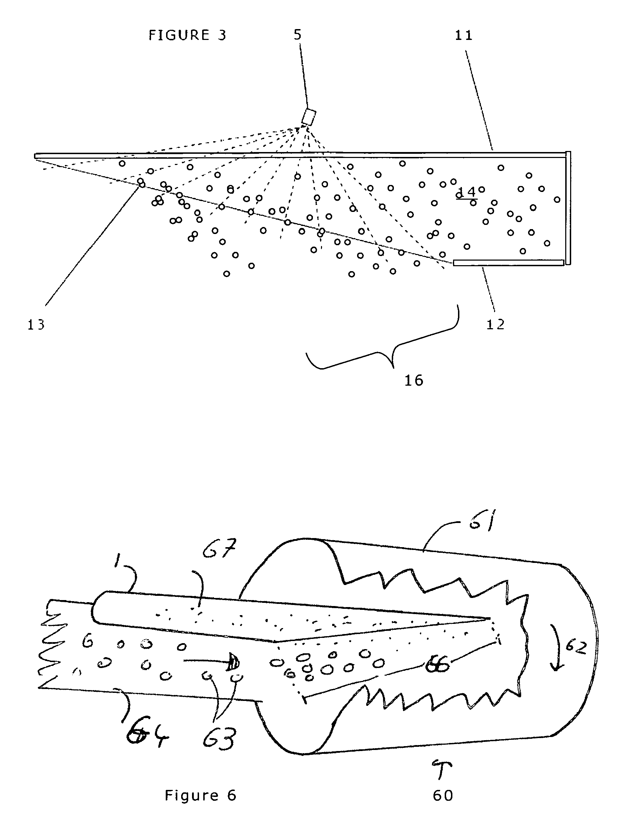

With reference to Figure 3, the nozzle 5 provides a broad angular spread of gas, whereby to provide a uniform air knife underneath the exit edge of the scarf feeder. Generally the gas jet will be directed between the horizontal and 35° above the horizontal. A gas knife can be provided in a number of different ways, as provided by a gas flow actuator such as an angular spread nozzle, a slot nozzle or an array of nozzles positioned to provide an impinging gas flow for the coating powder 16 as it falls under the force of gravity from the chute, as will be described below.

As shown in Figure 3, the chute 1 comprises the two unequal length planar sides 11 and 12, either side of a flat chute floor 14. Typically the exit edge is angled between 70° and 20° to the perpendicular with respect to the conveying direction, the particular angle being determined by the desired width of coating product. The exit edge 13 should have a straight edge to ensure equal deposition of powders and other coating materials across the exit edge. However, variations would be possible if unequal distribution is desired for bespoke situations. The chute is fed by a hopper, not shown at the entry end 4. The chute as a whole is vibrated by a vibrator operating at a typical frequency of 30 - 160Hz, but this is variable to suit specific angles of slope of the conveyor and the nature of the coating product, taking into account - but not necessarily limited to such characteristics - the size, weight, density and shape of the product as well as the stroke of the vibratory system. The chute and vibratory device are mounted upon resilient legs, which are, in turn, mounted upon a frame for the conveyor apparatus, although other means of support can be provided. Conveniently, the vibrator is a caused to vibrate by mechanical or electrical pulses as is known. The entry end may have a sloped wall to assist in the reception of coating material.

Having explained the structure of the apparatus with reference to Figures 2 and 3, the operation of the apparatus will now be described.

A powder coating 2 is delivered from a hopper to the entry end 4 of chute 1 and, due to its inclined angle, is conveyed along the chute 1 towards the exit end 3 and edge 13 of chute 1. The length of the base is typically six times the width, but can be greater than this; the density, weight, shape and size of the powder or crumb/other coating product and the frequency of vibration of the chute will affect the distribution of the powder as it passes along the length of the base towards the exit edge. A motor may be provided in order to vibrate or shake the chute to aid the transfer of the coating substance along the length of the chute. Various other electro-mechanical devices may be utilised to vibrate the chute.

By the use of the scarf chute in accordance with the present invention, the width of the coating apparatus chute is not determinant as to whether product on any particular position of the conveyor is uniformly coated or not. Rather, the scarf chute is arranged so that the width of the exit of the vibratory chute corresponds with, in one embodiment, the conveyor width, taking into account spread of coating product at either side of the exit edge. Ideally the edge of the exit edge of the chute is arranged in a transverse fashion across the width of a conveyor, but this is not strictly necessary; the exit edge of the chute may be wider than the width of a product conveyor and may be angled to reduce its effective width over the conveyor. It has been found that a width of the exit edge of the chute being 90% of the width of the conveyor provides effective and uniform coating of product; the gas assistance providing sufficient dispersion of the coating product, although there will be limits, dependent upon the type of product and overall size. However, such determination would be well within the capability of the skilled man; a typical width of conveyor is 60cm; however the distance may be more than double this, and equally may be less than this.

As the powder coating 2 reaches the exit end 3 of the chute 1, it will spill over the edge of the exit edge 13 and begin falling under gravity. In the region below the exit end of the chute 1, gas - typically air for commercial reasons - is forced through the nozzle 5. Inventor has found the angular spread of the air assist must be in the range of 60° - 140°, preferably 110° - 140°, whereby to provide a uniform flow of air under the exit edge of the scarf feeder In contrast to previous scarf feeder systems it has been found that a uniform gas assist force along the length of the exit edge of the scarf across the exit fan angle is important. As will be appreciated, as the powder falls over the exit edge, it will be agitated to form an aerosol cloud; the air flow must therefore be present below all of the exit edge. The powder is preferably charged to assist in the provision of a uniform coating upon product and passes through an electric field created by the charged electrode 6. The powder becomes charged either as a result of direct exposure to the electric field or by a charge transfer mechanism from the pressurised gas. As has been suggested above, the airflow from the nozzle will also disperse the falling powder. It is preferred that the electrostatic charge is applied by way of an electrode. There may be one or more electrodes present within the air knife arrangement. The potential is of the order of tens of thousands of volts, conveniently in the range of 50- 80 KV.

The product to be coated will travel beneath the coating delivery apparatus on a product conveying apparatus such as a belt conveyor or a rotating inclined drum, inclined chute for example, such conveyor being grounded, as described in GB 2,385,810. As the conveyor is grounded, the product travelling on the conveyor is also grounded and the charged and dispersed powder is attracted to the product coating its exposed surfaces.

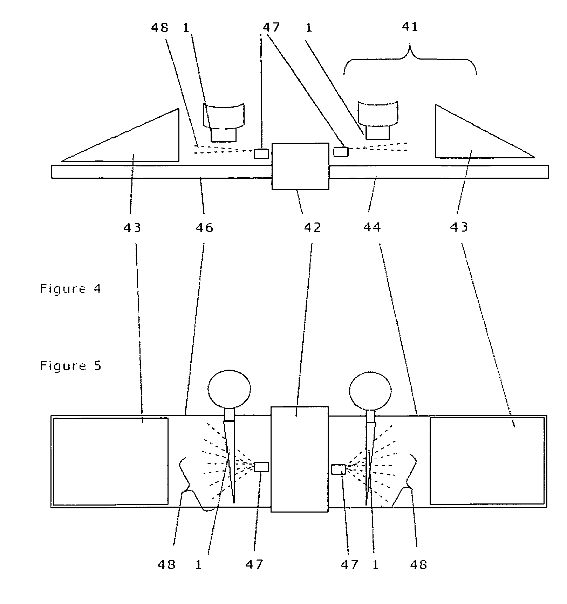

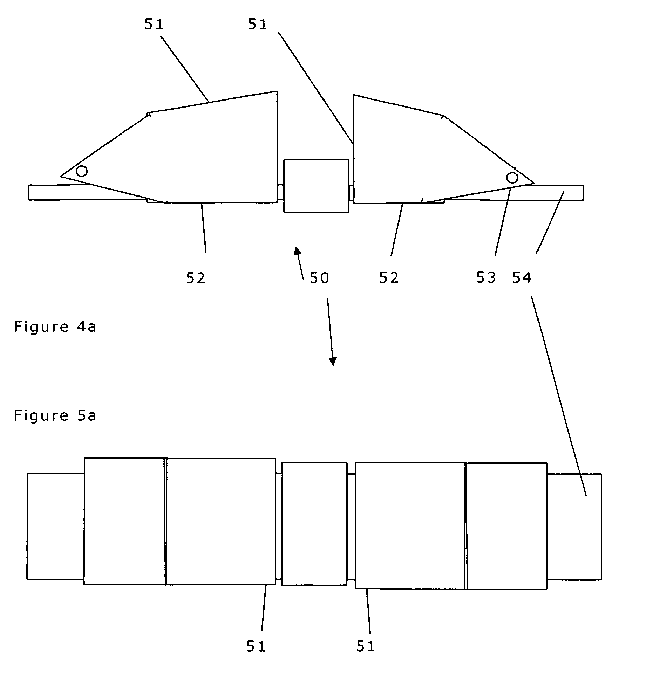

With reference to Figure 4 and 5, there is shown, respectively, side and plan views of a system in accordance with the invention, the system 40 comprising first and second product coating units 41 in accordance with the present invention and an inverter 42. Product coating units comprise a scarf feeder 1, which together with an electrode assembly and gas nozzle arrangement 47 is positioned over a conveyor within a shield 43. Scarf feeder 1 is operated such that products are coated upon a first surface on conveyor 44; inverter 42 then inverts the partially coated products onto a second side, which lie on conveyor 46, whereby a second surface of the product can be coated. The system shows a simple inverting apparatus determined between two conveyors 44, 46. Gas nozzle 47 provides a uniform gas jet or gas knife 48 underneath the exit edge of the scarf feeder. The gas knife will operate at a pressure, typically of between 0.5 - 3 Bar, dependent upon the nature o the powder coating. A distance between the closely spaced conveyors can be adjusted, dependent upon the nature of the product.

The chute as herein described can provide a wider distribution or spread of the coating substance away from the central axis of the base of the chute, as compared to the apparatus of GB 2,385,810. In processes that require the application of a coating across a wide area, the apparatus described here can provide simple and reliable coating systems which can be easily and quickly cleaned, whereby to reduce overall manufacturing cost sand also enable a quick changeover of flavourings, for example in a snack factory.

In the event an enclosure is employed, a significant advantage to the present invention is the lack of waste product in unison with a substantially uniformity of coverage upon both sides of a two-sided snack product. As will be appreciated, the present invention is applicable to non-planar snack and non-snack products. Where two conveyor systems are used to transport product, there are a number of types of inverting apparatus, some of which are not too dissimilar to mouldboard ploughs; other systems rely upon a rotational fall of product from one conveyor to another to cause inversion. As will be appreciated, single sided flavouring can significantly reduce the damage and possibly waste of product and correspondingly increase product quality when utilised with the present invention in comparison to the tumble-like coating system when drum systems (either closed at one end or open at both ends) are utilised. Notwithstanding this, the present invention still finds applicability in coating system for products less likely to be damaged by tumbling or where the effects of tumbling within a drum are not particularly poor for the product.

Figures 4a and 5a show the same system as described with reference to Figures 4 and 5 with an enclosure 50 - although the scarf feeder input does not extend beyond the sides of the conveyor, whereby the enclosure can be as narrow in width so that it is not significantly wider than the conveyor. Indeed, product to be coated may be provided via a tube to a reservoir associated with a scarf feeder, as is known, whereby to enable a reduction in width of the scarf feeder apparatus. The coating machine comprises two coating stations enclosed by hoods or enclosures 50. The enclosure or hood 50 is conveniently manufactured from a plastics material, such as polypropylene, but is not necessarily made from such material.

Incoming product is received on a vibratory or belt conveyor or similar. The conveyors are conveniently of a standard width, typically being: 30, 40, 50, 60, & 90cm within Europe. With reference to Figure 4a, at either end of the coating system 50 in accordance with the present invention, there are coating units, which comprise an enclosure or hood 51 which defines an enclosed space with sufficient volume to enable a coating to be applied. The enclosure or hood 51 can conveniently be hinged at 53 whereby, upon opening, for inspection or otherwise, a weight associated with the hood is borne by the apparatus, through a pivot element. The hood has side elements 52 which depend either side of the conveyor below each side of a conveyor 54.

The enclosure can minimise the possibility of coating product passing from the enclosure other than as a coating upon product, especially reducing aerosol and airborne coating materials. An internal gutter may be provided to prevent any accumulated coating, which may nonetheless adhere to an inside of the enclosure, from dropping in a clump-like fashion upon product to be coated. The provision of an enclosure over the powder distribution area enables a considerably reduced wastage of coating product. Additionally, the wastage that will occur will not readily enter the atmosphere surrounding the equipment, thereby considerably improving the working environment for personnel. By having reduced wastage, then equipment will be easier to maintain, again reducing downtime. The enclosure or hood may be fitted with handles whereby to assist in raising the enclosure or hood, for inspection, maintenance or otherwise.

With reference to Figure 6, there is shown a system 60 which includes a drum, 61 rotating in direction indicated by arrow 62 about a rotational axis (not indicated). In contrast to the system described above, the scarf feeder is arranged such that the chute is generally arranged axially within the drum, whereby powder coating is allowed to fall generally along the in inside length of the drum. Product 43 is transported by conveyor 64 toward the drum where it is caused to rotate within the drum by agitating elements such as tines (not shown). Chute 1 provides a large exit width 66 which allows powder 67 to be dispersed in the drum.

The scarf feeder apparatus in accordance with the present invention can be retrospectively fitted to known systems, whereby to improve the uniformity of coating of product, whether as fitted to a drum system, one or more single sided conveyor systems or other types of powder coating conveyor systems.

## Claims

1. An apparatus for delivering a coating substance towards a product to be coated in a coating system, the coating system having an operating width, the apparatus comprising an inclined vibratory chute for conveying the coating substance to a location above said product, the chute comprising a base, a feed end, operable to receive a coating substance, a pair of unequal length sidewalls and an exit, the exit being defined between the ends of unequal length sidewalls disposed across the width between the ends of the chute, the width of the chute being less than the width of the exit, the apparatus further comprising a gas nozzle located to provide, in use, a gas knife substantially immediately beneath and uniformly across said exit for dispersing the coating substance falling from said chute, whereby to coat product.

2. An apparatus according to claim 1, further comprising an electrode attached to or located adjacent to the gas nozzle; and means for charging the electrode; wherein the charged electrode acts so as to impart a charge to said gas flow and so onto the coating substance falling from the chute.

3. An apparatus according to claim 1 or 2, wherein the gas nozzle provides an angular spread of gas, wherein the angular spread of the air assist is in the range of 60° - 140°

4. An apparatus according to any one of claims 1 to 3, wherein the coating apparatus comprises a conveyor upon which product is placed, whereby the chute, in use, can provide a wide distribution of coating to evenly and thoroughly disperse coating substance upon said conveyor surface.

5. An apparatus according to any one of claims 1 to 3, wherein the coating apparatus comprises first and second conveyor surfaces, interposed by an inverting station;
Said first and second stations having respective first and second chutes;
in use, the first conveyor receiving product to provide a first surface of the product, upon which a coating from said first chute is received; the inverter then inverting the product and placing the product on a second conveyor, whereby to provide a second surface of the product, upon which a coating from the second chute is received, whereby the chute, in use, can provide a wide distribution of coating to evenly and thoroughly disperse coating substance upon said product surfaces.

6. An apparatus according to claim 4 or 5, further comprising an enclosure operably arranged to cover the or each coating stations, the enclosure defining an internal space above each chute and enabling a coating vapour to be established which can deposit coating uniformly upon product being transported upon a conveyor, the enclosure being arranged to abut the sides of each coating station and having ends transverse to the direction of the conveyor, with a lower edge being sufficiently adjacent above the conveyor to enable passage of product being transported upon the conveyor.

7. An apparatus according to any one of claims 1 to 3, wherein the coating system comprises a rotatable drum apparatus, the drum having an entrance aperture and an exit aperture at opposite ends of an axis of rotation, whereby the chute, in use, can provide a wide distribution of coating to evenly and thoroughly disperse coating substance within said drum apparatus.

8. A method of delivering a coating substance towards a product to be coated, the method comprising conveying the coating substance along an inclined scarf chute to a location above a surface carrying the product, the chute comprising a base, a pair of unequal length sidewalls and an exit edge of the chute beyond said side walls; allowing said coating substance to fall from the exit and lay upon product which passes below the chute.

9. A method according to claim 8 further comprising the step of subjecting the coating substance to a gas jet, whereby to assist in a dispersal of the powder.

10. A method according to claim 9, wherein the gas assist is provided by a single gas jet nozzle which provides an angular spread of gas in the range of 90° - 140°

11. A method according to claim 8 further comprising the step of subjecting the coating substance to an electric field as the coating substance falls under gravity towards a product, substantially immediately beneath the exit end of said inclined chute, whereby to charge the coating substance, further including the step of grounding the product to be coated whereby toe cause the coating to be electrostatically attracted to said product.

12. An inclined vibratory chute for placement within a system according to any one of claims 1 - 7 or for use in a method according to any one of claims 8 - 11
